(19) Europäisches Patentamt

European Patent Office

Office européen des brevets

(11) **EP 1 307 276 B1**

(12) **EUROPEAN PATENT SPECIFICATION**

(45) Date of publication and mention
of the grant of the patent:
**05.07.2006 Bulletin 2006/27**

(21) Application number: **01956726.2**

(22) Date of filing: **06.08.2001**

(51) Int Cl.:
**B01D 53/02** *(2006.01)* **B01D 53/047** *(2006.01)*

(86) International application number:
**PCT/IB2001/001399**

(87) International publication number:
**WO 2002/012796 (14.02.2002 Gazette 2002/07)**

(54) **METHOD AND APPARATUS FOR IMPROVING THE AIR QUALITY WITHIN A BUILDING OR ENCLOSED SPACE**

VERFAHREN UND VORRICHTUNG ZUR VERBESSUNG DER LUFTQUALITÄT IN EINEM GEBÄUDE ODER ABGESCHLOSSENEN RAUM

PROCEDE ET DISPOSITIF PERMETTANT D'AMELIORER LA QUALITE DE L'AIR DANS UN BATIMENT OU UN ESPACE FERME

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.08.2000 US 222907 P**

(43) Date of publication of application:
**07.05.2003 Bulletin 2003/19**

(73) Proprietors:
• **Rahn, Günter**
**35327 Ulrichstein (DE)**
• **Massenbauer-Strafe, Ilse A.**
**Tsim Sha Tsui,**
**Kowloon,**
**Hong Kong (CN)**
• **Neirynck, Brian M. C.**
**Tsim Sha Tsui,**
**Kowloon,**
**Hong Kong (CN)**
• **Strafe, Jürgen F.G.**
**Tsim Sha Tsui,**
**Kowloon,**
**Hong Kong (CN)**

(72) Inventors:
• **Rahn, Günter**
**35327 Ulrichstein (DE)**
• **Massenbauer-Strafe, Ilse A.**
**Tsim Sha Tsui,**
**Kowloon,**
**Hong Kong (CN)**
• **Neirynck, Brian M. C.**
**Tsim Sha Tsui,**
**Kowloon,**
**Hong Kong (CN)**
• **Strafe, Jürgen F.G.**
**Tsim Sha Tsui,**
**Kowloon,**
**Hong Kong (CN)**

(74) Representative: **Piésold, Alexander James**
**Frank B. Dehn & Co.**
**St Bride's House**
**10 Salisbury Square**
**London EC4Y 8JD (GB)**

(56) References cited:
**US-A- 4 545 790** **US-A- 4 896 514**
**US-A- 4 950 312** **US-A- 4 983 190**

**Description**

FIELD OF THE INVENTION

This invention relates to a method and apparatus for improving the air quality within a building or enclosed space and, in particular, a multi-room building with an air circulation system. However, the invention may also apply to a single room of a building or to a vehicle such as an aeroplane, train, bus or car, for example.

BACKGROUND TO THE INVENTION

In most urban environments, there is a decreasing quality of air available in the general atmosphere. This reduction in air quality is repeated within buildings and, in some instances, can even be worse. Smoking within an enclosed building is harmful not only in respect of passive smoking but also due to the reduction in oxygen content and general impurities provided into the air aside from nicotine or tar.

The decrease in air quality is not only due to a decrease in oxygen content but also a corresponding increase in a number of potentially harmful constituents or pollutants. These include an increase in suspended particles, carbon dioxide, carbon monoxide, nitrogen dioxide, bacteria, formaldehyde, total volatile organic compounds (TVOCs), radon and organic odour causing compounds.

Health problems associated with long term exposure to poor air quality are well documented. In addition, poor air quality can have an immediate effect on productivity of a workforce by leading to lethargy. This can set in very quickly upon exposure to poor air quality.

Traditional forms of manipulating the atmosphere within a building utilize air conditioning for temperature control. Although the air conditioning units may be provided with some filtration, these filters are generally an after-thought merely to preclude coarse particles from going through the air conditioning system. Regardless, these filters are generally static filters in each of the air inlets or outlets throughout the building and quickly become clogged with particulate matter. This requires regular maintenance to clean and replace the filters. Failure to do so can quickly turn the filters into a breeding ground for harmful organisms rather than any attempt to improve air quality.

In general, air conditioning units tend to circulate the problems throughout the building rather than actually remove them. Such consequences lead to sick building syndrome or building related illnesses that get steadily worse over time.

It is already known to partially improve the air quality through increasing the oxygen percentage within the atmosphere. Such techniques are already employed in some buildings such as casinos to provide some refreshment to patrons and encourage them to stay longer than intended. However, such systems generally supplement the air stream with additional oxygen and exhaust air from the building to the outside. They do not endeavour to treat the air within the building or address specific problems of impurities.

Other apparatus seeks to improve air quality only in a controlled and highly localized environment through such apparatus as oxygen ventilators. Such ventilators are provided with face masks or similar to improve the air quality to a single user. However, such ventilators are not generally suitable or adapted for use in a larger environment.

Although there are some methods of providing artificial room environments, the production and control of physiological room environments has only been partly solved. To produce a room environment in closed spaces that is biologically and physiologically bearable to a certain extent requires large technical expenditure and only succeeds because the complexity of the atmosphere is "reduced" to a few parameters that can be technically implemented. On top of that come parameters that arise additionally in the rooms. These are essentially emissions of gases from technical equipment and electrical and electromagnetic fields that are not calculable but which can best be summarized under the term "electrosmog" and whose mode of action on the human organism we are only just beginning to realize. The parameters than can be regulated through most air conditioning systems are humidity temperature, dust content and air speed.

Other parameters can be regulated by air conditioning systems only with great difficulty or even not at all. These may include the composition of the air (mostly dependent on the point of intake) and the regional atmosphere (especially in big cities).

Hygiene represents a large problem with air conditioners. Because of the optimal conditions within the piping system (damp and warm air, filter), an optimal environment for fungi and bacteria is provided here. Settlements of Legionella pneumophilia are known to be a trigger of legionnaire's disease, a severe inflammation of the lungs with a high fatality among the elderly and those with a weakened immune system. What causes more problems are settlements of fungi from the group aspergillus, penicillium and stachobotrys. Fungal spores breathed in lead to the manifestation of allergic alveolitis (or air conditioner lung as it is also called, an occupational disease among air conditioning engineers), to changes in domestic households in the immunoglobulines 1gE and 1gM or, in people with weakened immune systems, also to a severe inflammation of the lungs. Regular replacement of filters and cleaning of the pipe installations can stem this problem but never eliminate it.

A further problem with air conditioners is the problem of the preparation of the air taken in, to the effect that harmful chemicals from the air (e.g. aldehyde) are caught and enriched in the filters and thus fed into the ventilation system in clearly higher concentrations. Thus in 1993 Rumel et al. of the University of Sao Paolo (Department of Epidemiology) were able to prove a statistically significant connection between myocardial infarcts, the carbon monoxide load and a higher ambient temperature, a connection that may well also be of importance for artificial room environments in conurbations with high carbon monoxide loads.

The biggest problem with air conditioned rooms, however, is unambiguously the monotony of the artificial room environment and the addition of non-physiological substances, but also the addition of physiological emissions of the people working there. It is known that a person gives out approximately 2,000 chemically defined substances through the skin. The evaporation through the skin amounts during normal physical activity and room temperature to approximately 1-1.5 litres a day. These substances have to be continually removed through an efficient exhaust system. Unfortunately there have been no studies on this theme. It is to be assumed, however, that in open-plan offices, for example, enormously high concentrations of these emissions are present. These substances are detected by certain receptors in the nose and processed unconsciously. As substances such as oestrogen, testosterone and so-called pheromones are among these, it can easily be imagined that patterns of behaviour such as aggression, "territoriality", sexual advertising are concealed in an uncontrolled way or break out openly. The mood in an office can also be very significantly defined by this, without anyone in the room being aware of it. But then, in turn, the conscious abilities suffer from this such as discipline, concentration, creativity, decision-making power. The task of an air conditioner should therefore be to record this spectrum and also to create "cleaner air".

Under stress, clearly higher "stress substances" are given out than in a relaxed atmosphere.

A further task of air conditioners should be to take care that no charging of the air with or pathogens takes place, which can only be solved indirectly if the air is not to be sterile.

The factors described above and their effects are today incorporated under a specialist medical term, "sick building syndrome" (SBS). This term brings together disruptions in the psychosomatic, physical area into a complex clinical picture that only appears during work in an artificial room environment and fades away when that same environment is left. It is to be taken into consideration that upon chronic exposure it is absolutely possible for injuries to affect the body which then become independent after the artificial room environment is left and which can lead to chronic illness, and even to lasting invalidity. Thus it also becomes very clear that for medical, socio-medical and economic reasons, preventive measures to avoid SBS are urgently called for and that existing solutions are not sufficient.

OBJECT OF THE INVENTION

It is an object of the present invention to provide a method and apparatus for improving the air quality within a building that overcomes some of the disadvantages of the prior art by increasing usable oxygen levels to humans and decreasing percentage of harmful constituents and pollutants throughout a room or, through the air circulation system, an entire building or other enclosed space such as a vehicle. It is at least an object of the present invention to provide the public with a useful choice.

SUMMARY OF THE INVENTION

Accordingly, in the first aspect, the invention may broadly be said to consist in a method of improving the air quality within an enclosed space comprising the steps of:

- drawing air from within said enclosed space;
- passing said drawn air through at least a first filter to remove at least some particulates;
- directing filtered air to and retaining within at least a first molecular sieve containing nitrogen and/or carbon dioxide and/or carbon monoxide absorbing material;
- allowing air of greater usable oxygen content to be drawn from said molecular sieve and directed to an outlet within said enclosed space;
- flushing said molecular sieve to remove at least some nitrogen and other gases from said molecular sieve while containing or caging carbon from carbon containing gases characterised in that
- at least a portion of nitrogen and other gases resulting from the removal of carbon are flushed from said molecular sieve and returned and combined with said air of higher usable oxygen content

Preferably said method includes the provision of at least two molecular sieves operating in the alternative such that at least one sieve is operating while a first sieve is flushed.

Preferably said method includes the use of three molecular sieves such that one is being filled, a further is retaining drawn air for a period of time and a third is being flushed.

Preferably said method includes drawing said air from an air circulation system within a building and returning said air of higher usable oxygen content and reduced pollutants to said circulation system.

Alternatively said method includes the provision of a free standing unit within a room of a building with an air inlet, an outlet for higher usable oxygen containing air and reduced pollutants and said exhaust are all provided on said unit within said room.

Preferably this method involves reducing pollutants or harmful constituents including suspended particles, carbon dioxide, carbon monoxide, nitrogen dioxide, bacteria, formaldehyde, total volatile organic compounds, radon and organic odour

Accordingly, in a second aspect, the invention may broadly be said to consist in an apparatus for improving the air quality within an enclosed space comprising:

- an air inlet to draw air from within said enclosed space;

- at least a first filter to remove at least some particulates;

- at least a first molecular sieve containing nitrogen and/or carbon dioxide and/or carbon monoxide absorbing material to receive said filtered air and retain in contact with said nitrogen and/or carbon dioxide and/or carbon monoxide absorbing material;

- an outlet from said molecular sieve for air having a higher usable oxygen content and reduced pollutants to be drawn and returned to the enclosed space; characterised in that the apparatus further comprises

- means to flush said molecular sieve combined with outlet exhausts into the enclosed space.

Preferably said apparatus comprises a free standing unit having an air inlet, an outlet for higher usable oxygen containing air and an exhaust all within a room environment.

Alternatively said apparatus comprises a unit connected or connectable to an air circulation system within a building or enclosed space to treat air throughout said building or enclosed space.

Preferably said molecular sieves are operated under a pressure greater than atmospheric.

Preferably said apparatus includes at least three molecular sieves such that one molecular sieve may draw air in while a further molecular sieve is retaining a previously drawn quantity of air and a third molecular sieve is being flushed having completed its cycle of operation.

Preferably said apparatus reduces pollutants including suspended particles, carbon dioxide, carbon monoxide, nitrogen dioxide, bacteria, formaldehyde, total volatile organic compounds, radon and organic odour causing compounds.

Further aspects of this invention may become apparent to those skilled in the art upon reading the following description.

BRIEF DESCRIPTION OF THE DRAWINGS

Preferred embodiments of the invention will now be described with reference to the following drawings in which:

- Fig. 1 shows a schematic diagram of an apparatus forming part of a preferred embodiment of the invention;
- Fig. 2 provides graphical results following test operation of a preferred embodiment of the apparatus showing total suspended particles, carbon dioxide and carbon monoxide against time;
- Fig. 3 shows graphical results of the levels of nitrogen dioxide in the same test as in Fig. 2;
- Fig. 4 shows a further graphical representation of results of a further test showing the results for carbon dioxide and carbon monoxide;
- Fig. 5 shows a graphical results of the tests detailed in Fig. 4 in terms of suspended particulates and nitrogen dioxide; and
- Fig. 6 shows a schematic diagram of one possible positioning of an apparatus in air circulation system of a building.

DETAILED DESCRIPTION OF PREFERRED EMBODIMENTS

The invention relates to a method and apparatus for improving the air quality within a building or other enclosed space including transport vehicles such as planes, trains, etc. Referring to the drawings, a first embodiment of an apparatus to improve air quality is shown. This diagram shows a portion of the apparatus that may be incorporated to act within an air circulation system in a building or provided as a freestanding unit in a single room or any other controlled environment.

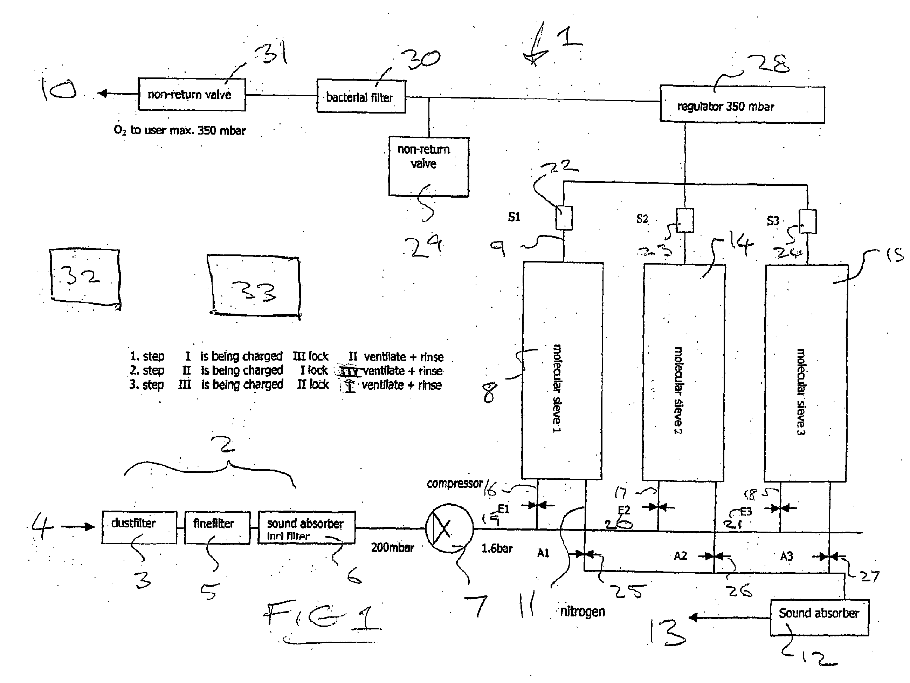

It should be appreciated that the apparatus 1 in Fig. 1 provides a number of separable components and these components can be provided as a single comprehensive apparatus within a single housing or separately provided in communication with each other as desired. Furthermore, the apparatus 1 may be included within a larger installation in a building air circulation system other than a separate apparatus fitted to the circulation system.

In the endeavour to provide better treatment or conversion of the air within an enclosed space, the present invention looks towards the use of zeolites as attenuators for the air.

The requirement upon the filtration or treatment system should be that it can absorb harmful chemicals such as carbon dioxide, carbon monoxide, ozone, sulphur dioxide, nitro gases, ammonia, hydrocarbons, human emissions such as pheromones, emissions from electronics dust particles, bacteria or fungal spores, formaldehyde and radon. Aside from this, the environment within the enclosed space can be altered to affect humidity, temperature to optimize the circulation.

Zeolites are minerals with a relatively high porosity and where the pores are channels at a molecular and atomic level. They are alkali aluminium silicates with the common formula $M_{(X/n)}[AlO_2]_x(SiO_2)_y] * z\,H_2O$. The zeolites form a 3-dimensional crystal lattice being a regular system of channels with defined pore sizes. Generally embedded in the hollows of the lattice are relatively free-moving alkalis and alkali earth ions such as sodium, potassium, magnesium and calcium which can be exchanged for other ions or charged particles without a large expenditure of energy and without destruction of the crystal lattice.

The result of this is that the zeolite is particularly suitable as an ion exchanger, catalytic converter and detoxification agent.

In employing zeolites in the present invention, the zeolites may be used in molecular sieves. The relatively open structure of the zeolites creates apertures of molecular dimensions.

A molecular sieve is so named due to the observation that they may absorb molecules that are smaller than the aperture dimensions and so can be used to separate molecules of different sizes. Within the range of molecular sieves, those using zeolites provide both a cage structure or tunnel structure to trap molecules as well as providing ion exchange.

Careful selection of the zeolite for a particular molecular sieve and use can allow the tailoring of the molecular sieve to target particular molecular sizes and, hence, particular pollutants. Although, it is noted that larger molecules may also be trapped.

Referring to Fig. 1, the apparatus 1 may provide some initial filtration to remove particulate matter. This initial filtration performed by an initial filter 2 may comprise a plurality of different graded filters for different purposes. As detailed in this preferred embodiment, the initial filtration 2 may comprise a dust filter 3 adjacent an inlet 4 receiving air from within the room or building. This may be followed by a fine filter 5 and/or a bacteria filter to further reduce particulate matter and a sound absorber 6 that may include some further filtration.

Overall, the filtration provided by a single or series of filters forming the initial filtration 2 is intended to remove coarse particulate matter, fine particulates and preferably bacteria although does not seek to increase oxygen content.

A compressor 7 is provided to assist in drawing air into the inlet 4 and through the initial filtration 2. Furthermore, the compressor seeks to pressurize the air passing through at least one molecular sieve 8 downstream of the compressor 7. It will be readily appreciated that the compressor may be replaced by alternative air circulating devices and may be redundant if incorporated within an existing or larger air circulating system that already provides some pressurization of the passing air.

Following the initial filtration, the air is passed through at least one molecular sieve 8. The molecular sieve 8 will generally operate at greater than atmospheric pressure and contain nitrogen and/or carbon dioxide and/or carbon monoxide absorbing materials or materials that can break the bonds of these compounds to release oxygen.

Typically, a molecular sieve will be charged with a quantity of air that is then retained in contact with the nitrogen and/or carbon dioxide and/or carbon monoxide absorbing or altering material. Air of greater oxygen content having progressed through the molecular sieve may be drawn off through an outlet 9 and eventually to an outlet 10 for distribution throughout the building or enclosed space. The molecular sieve may then be reverse flushed to release some of the nitrogen-enriched byproducts through an outlet 11. As shown in this preferred example, a further sound absorber 12 may be provided on the outlet to reduce noise and the materials are then returned through a further outlet 13, again to the building environment or exhausted externally. Although it may appear that the building is being recharged with the impurities if exhausted into the building, this does not prove to be the case.

The building is not recharged with the impurities due to the particular function of the preferred use of zeolites in the molecular sieve. The zeolites can trap impurities in the cage light structures as well as breaking the bonds of these compounds to release oxygen and retain the carbon molecules. The action of this air light is such as to not only remove impurities but change some of those impurities into increased oxygen contact to be returned to the enclosed space.

In a preferred form, the apparatus includes more than one molecular sieve. Due to the cyclic nature of the processing of a molecular sieve requiring charging, retention and flushing, at least two and preferably three molecular sieves 8, 14 and 15 are provided. The provision of three such sieves allows one molecular sieve to be charged with incoming air while a further sieve is locked and a yet further sieve flushed.

As shown in this embodiment, each of the molecular sieves is provided with an inlet 16, 17, and 18 having an associated inlet valve 19, 20 and 21. Valves 22, 23 and 24 are also provided on the outlet for the oxygen enriched air and valves 25, 26 and 27 on the further outlet for rinsing or flushing of the molecular sieves. Control of these valves allows independent operation of the molecular sieves such that the molecular sieves may cycle out of phase with one and other and provide a substantially continuous flow of air through the apparatus 1 as a whole.

A pressure regulator 28 may be provided on the outlet to regulate outlet pressure as well as non-return valves 29 and 31 on either side of a bacterial filter 30. The bacterial filter 30 is already acting upon highly processed air and can be a very fine filter to remove final constituents.

With regard to the molecular sieve, a variety of materials may be utilized that are capable of attracting nitrogen and/or carbon dioxide and/or carbon monoxide containing molecules while allowing oxygen molecules to pass. In this preferred form, each of the molecular sieves is identical as they are operated alternately. The molecular sieves may contain constituents substantially as provided by the proprietary product 'OXYSIEVE 5' as manufactured in Europe.

The proprietary product mentioned in the previous paragraph is one particular product containing zeolites which, as a class of materials, is referred from molecular sieves in this apparatus. Molecular sieves containing aluminium silicate or, more preferably, zeolites of specific molecular construction can provide containment and/or molecular breakdown of selected elements and/or compounds which will normally be the pollutants in the enclosed space.

A power supply 32 is also provided in the apparatus 1. The power supply may comprise an inlet for mains single phase or three-phase power as desired with suitable control and current and voltage manipulation to run the compressor 7 and drive such other apparatus as may be required within the overall unit.

Additionally, a control means 33 is provided to control individual operations of the valves, running of the compressor and monitor pressures, outputs, etc. In at least one preferred form, the invention may include some form of sensor on the outlet air to note a reduction in the quality of the outlet air and alert operators to a potential problem or the need to clean filters, etc.

The flow through the unit depends on the size and power of the unit although it is far from necessary for the unit to process all the air passing through an air circulation system. As the unit can operate substantially continuously if desired, only a small percentage of air within a building or passing through an air circulation system needs to be processed at any particular time. This will lead to a gradual increase in the air quality throughout the area of circulation.

First Experiment

A first experiment utilizing an apparatus in accordance with the embodiment generally shown in Fig. 1 was performed in a room of volume approximately 30 cubic meters.

The apparatus as shown in Fig. 1 had a total air inlet of 90 litres per minute and an oxygen outlet was set at 4 litres per minute.

The room in which the experiment was performed had its own air ventilation system switched off and the apparatus was run in the room such that the inlet, the higher oxygen output and the exhaust from the flushings of the molecular sieve all occurred in the same environment. There was no need to exhaust the nitrogen and pollutant enriched exhaust to the outside.

A number of cigarettes were burnt in the room prior to the test to increase pollutant levels and the levels of suspended particles, carbon dioxide, carbon monoxide and nitrogen oxide were monitored before commencement of the apparatus and subsequently at 2, 4 and 26 hours after the apparatus was started.

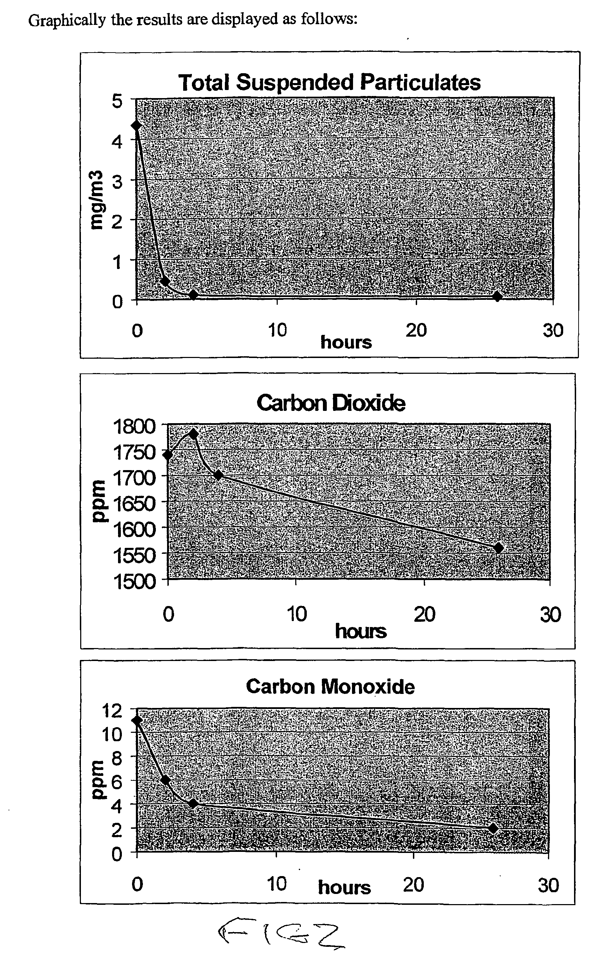

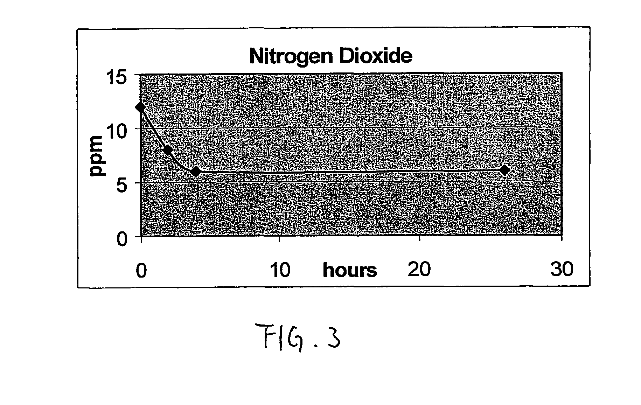

The results of this experiment within a close-room environment are shown graphically in Fig. 2 in respect of total suspended particulates, carbon dioxide and carbon monoxide and in Fig. 3 for nitrogen dioxide.

It can be seen from Figs. 2 and 3 that the method and apparatus was capable of causing large reductions in each of these parameters. Furthermore, at least in respect of some of these parameters, the results are highly surprising.

The apparatus provides filtration on its inlet that could realistically be expected to reduce total suspended particulates and cause a reduction such as that shown in the upper portion of Fig. 2. However, the molecular sieves containing nitrogen and/or carbon dioxide and/or carbon monoxide absorbing granules seek to allow oxygen to pass while retaining the nitrogen and other gases. This is subsequently flushed using a portion of the oxygen-enriched output and returned to the same room. Therefore, although it can be expected to see a reduction in nitrogen dioxide or other pollutants in the outlet air, the return of the exhaust to the same room environment would suggest that no such total reduction in the room should be observed. Furthermore, the corresponding reductions in carbon dioxide and carbon monoxide are significant yet either should pass through with the oxygen or be returned to the room environment through the exhaust. As shown in this experiment, the apparatus and the method successfully provides reductions in all such pollutants within the room environment.

Second Experiment

In a second experiment, the apparatus was connected to the ventilation system of a building. The ventilation system had a fresh air inlet only with no re-circulation and no forced exhaust. The ventilation system operated between 8:00 a.m. and 6:00 p.m. each day and at an inlet flow of approximately 80 cubic meters per minute.

The air intake of the building is located in a room open to outside air. An apparatus generally in accordance with Fig. 1 was placed next to the air-intake unit with the oxygen enriched outlet being fed by a line directly into the air intake of the ventilation system. The exhaust from the apparatus was exhausted into the room and could also enter the intake system with the general airflow for the ventilation system. The apparatus was left to run continuously rather than only during set time periods.

The apparatus generally in accordance with Fig. 1 had a total air inlet of 320 litres per minute. The outlet oxygen enriched air is set at 13 litres per minute.

A series of air quality measurements were made within the building over an extended period during which the apparatus was in operation or out of operation as desired to note the changes.

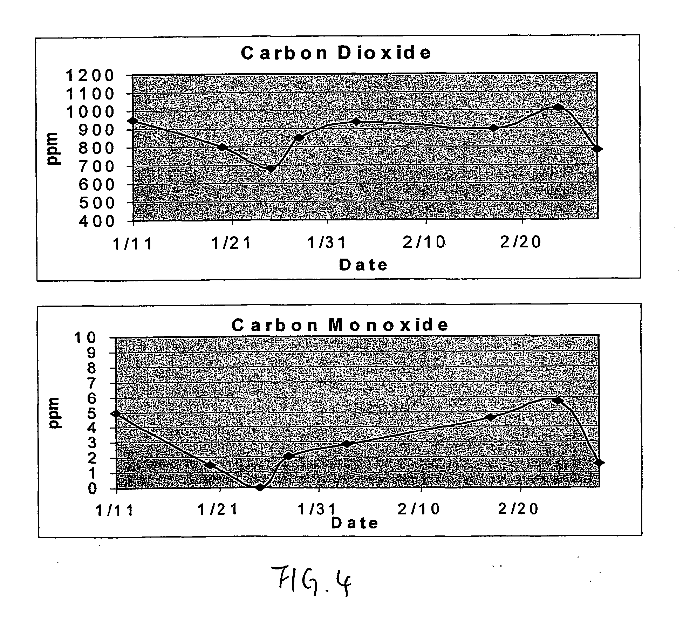

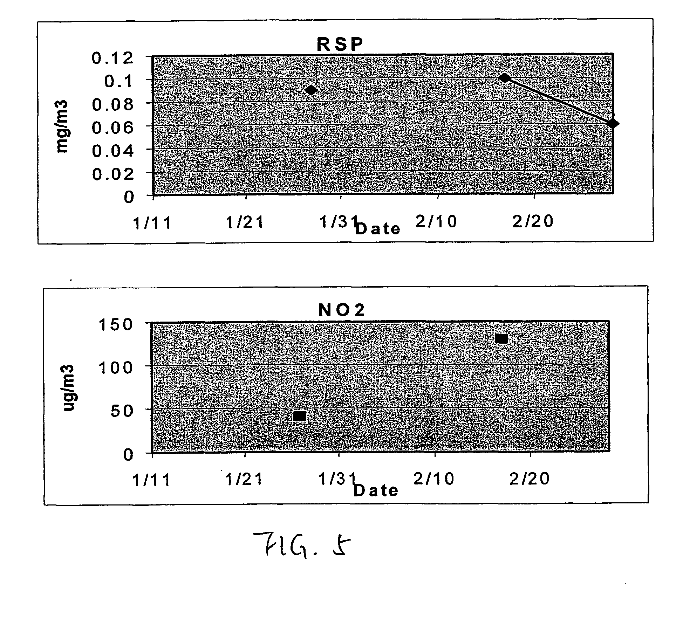

The results of this test in terms of carbon dioxide and carbon monoxide level is shown in Fig. 4 with the suspended particulates and nitrogen dioxide data in Fig. 5.

The test commenced on 11 January with the apparatus being turned on and left to continue until 28 January. After testing on that day, the apparatus was switched off to consider the effect return of pollutants to the building. The apparatus was then returned to an operative state on 17 February.

As shown in the results in Figs. 4 and 5, there is a general reduction in the pollutants of carbon dioxide, carbon monoxide and suspended particulates during the periods of operation of the apparatus. The nitrogen dioxide reading increased significantly when the apparatus was switched off.

It is noted that there is a rise in pollutant levels just at the end of the first period of operation between 25 and 28 January. This rise between those dates may be due to environmental factors such as particularly heavy pollution in the surrounding environment on those dates.

The apparatus 1 as shown in Fig. 1 is only providing fractional input to the air ventilation system. In fact, the output of the apparatus 1 is only about 0.1% of the volume of air passing through the air ventilation system. Regardless, significant reductions are shown.

It should be noted that the apparatus 1 was left running overnight in these tests while the air ventilation system was switched off. It could realistically be expected that the apparatus 1 improved the air quality in the air inlet room significantly to boost levels upon start up in the next morning. However, again, with the exhaust from the apparatus 1 also being in the same room and such a boost upon start up being only a temporary measure, the reduction in pollutants is still considered surprising.

Building Installations

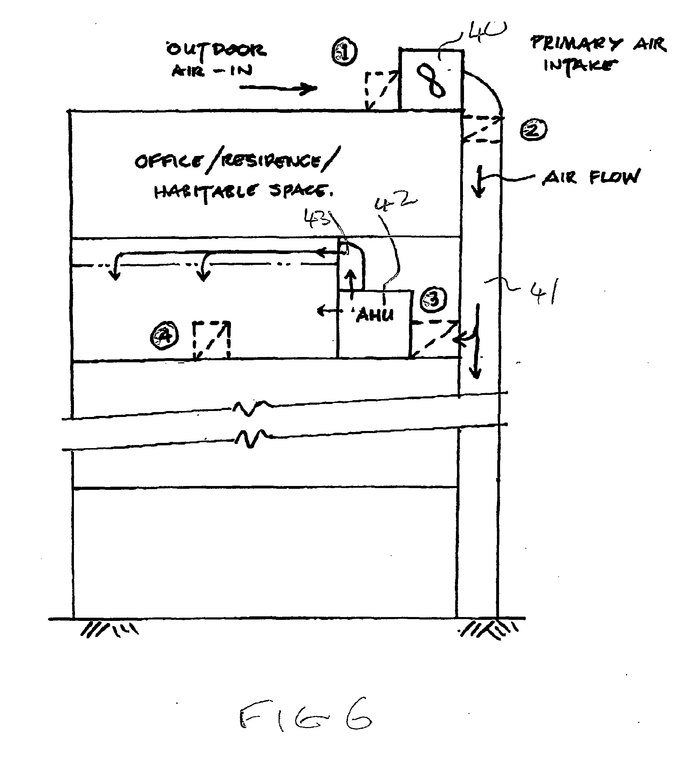

Referring to Fig. 6, a typical building installation is shown with alternative placements for a consolidated apparatus in accordance with Fig. 1 to be placed in a typical building ventilation system.

As shown in Fig. 6, a typical building ventilation system may comprise a primary air intake 40 to draw in outdoor air and this may be ducted by a conduit 41 to one or more air-handling units 42 within a control room. The air-handling unit 42 may then pass air to the specific office ventilation system 43.

As shown in this drawing, a series of alternative placements for an apparatus are shown being placements 51, 52, 53 and 54.

At placement 51, the apparatus 1 is placed with the primary air intake to produce a direct flow of oxygen enriched and pollutant reduced air. In placement 52, the apparatus may be within the conduit 41 or in communication with that conduit and downstream of the primary air intake 40.

In an alternative placement 53, the apparatus is said to operate with the air-handling unit within a suitable control environment. The final alternative placement 54 is generally within the office environment itself.

In the preferred form of this invention, placements 53 or 54 may be desirable as they are more capable of treating returned air being part of the overall circulation system. In contrast, placements 51 and 52 will provide oxygen enriched and pollutant reduced air to the intake air although were not necessarily in a position to treat any exhaust and in recirculation of the atmosphere.

It should be noted that, in relation to Fig. 6, the placements assume that the apparatus as shown in Fig. 1 is provided as a single unit. As described previously, the method does not require the apparatus to be provided as a single standalone unit and could comprise a series of units operating in communication with each other at different placements throughout the ventilation system or the building environment in general.

Theoretical Performance

It has been noted that zeolite molecular sieve performance is somewhat similar to dialysis clearance in renal replacement therapy. As such, selection of appropriate apparatus has some calculatable support.

In dialysis formula, the clearance C is determined by C = bloodflow (ml/min) x $[C_{in} - C_{out}]/C_{out}$ where $C_{in}$ and $C_{out}$ are the concentrations of toxins in and out of the apparatus.

Generally, the index for efficiency, Kt/V is such that the concentration C at

$$\text{time t } (C_t) \text{ is } C_t = C_o \text{ x } e^{-\{Kt/V\}}.$$

Where K = clearance

t = time

V = volume of distribution, $C_o$ = concentration at the start

$C_t$ concentration at time t

e is Eulers constant.

Similar formula can be built for the apparatus of the present invention where the zeolite clearance Z can be considered for each pollutant. The zeolite clearance for a single gas may be:

$$Z_{gas} = \text{gasflow x } [C_{gas\text{-}in} - C_{gas\text{-}out}] / C_{gas\text{-}out}.$$

In dealing with a typical room environment, a number of toxins are present and the zeolite clearance overall will be a function of its clearance of each of these toxins. If we take Z = gasflow ($m^3$/d) x $[C_{in} - C_{out}]/C_{out}$; $Q_c = [C_{in} - C_{out}]/C_{out}$, then the integrated zeolite clearance for a number of gases is $Z_{int}$ = gasflow x $[Q1 \text{ x } Q2 \text{ x } ....\text{x } Qn]^{1/n}$.

When contemplating the apparatus necessary for a particular room, a formula can be utilized to bring the environment up to a suitable standard such as that dictated by the World Health Organization (WHO). In doing so, the appropriate formula could be:

$$C_t = C_0 - \{C_0 - C_{WHO}\}\text{x } e^{-Kt/hs}$$

where $C_{WHO}$ equals the recommended concentration for toxic gases for an indoor environment by the World Health Organization

h = the height of the rooms

s = the area of the rooms

h x s = volume of the rooms.

The present invention can provide different models of machine having different gas flow rates and different quantities of zeolite to cope with different environments. From experimentation on the preferred embodiment of the apparatus, a model containing a zeolite mess of 1,650 grams has a gas flow of 129.6 $m^3$/24h. Experiment has shown that the zeolite clearances for such a machine can be shown in the following Table 1 for a 30-$m^2$ room.

Table 1

|  | **Z** | **Q** |
|---|---|---|
| CO | 583.2 | 4.5 |
| $CO_2$ | 14.95 | 0.1154 |
| NOX | 129.6 | 1.0 |
| RSP | 9,266.4 | 71.5 |

An integrated clearance factor Q can be expressed as Q = [Qco x Qco2 x Q nox x Q rsp] ¼ (value : 2,468).

This can be used as a calculation for this particular machine as to how many such machines may be necessary for a specific installation.

In the preferred form of this invention, utilizing zeolite molecular sieve also provides significant reductions in radon and its first degradation products. Radon is a particular problem in many countries as it is caged in natural minerals like granite. If granite powder is used as an additive in concrete, a high evaporation of radon gas may be started. The building will continue to emit radon gas into the atmosphere and has been related to building related illness. The ability of zeolite molecular sieves to provide clearance of radon is particularly useful in the preferred embodiment.

Thus it can be seen that the invention provides a method and an apparatus for improving indoor air quality that appears to cause significant reductions in important pollutants whether the exhaust from the apparatus is directed outside of the building or, returned to the environment for continuous recirculation. Although maintenance, cleaning and even replacement of materials within the molecular sieves may be required at intervals, the apparatus as described in the preferred form can operate substantially continuously without manual monitoring and potentially address a number of harmful constituents.

The present invention, in providing a method and apparatus that treats and purifies existing air and provides substantial advantages in building construction and ongoing costs for both buildings and other enclosed environment such as aeroplanes, etc.

Major cost in the construction of a building is the ducting of outside air through the building in a form of air-conditioning. Although the present invention may continue to use ducting throughout the building, the present invention's ability to treat air within the building avoids the need for air to be ducted to outside the building. Furthermore, it is easier to place installations in smaller areas throughout the building other than relying on a large central air-conditioning system. The airflows themselves may be significantly reduced as current air-conditioning technology relies on complete flushing of the air within the building to try and minimize the built-up of toxins.

A further advantage of the present invention is that, in the use of outside air to flush the building, the outside air itself often requires significant filtration in highly polluted cities.

An even more significant saving can be made in relation to power costs. To remove the toxins, current air-conditioning systems rely on removal of the air from within the building and the return of filtered air from outside the building. Of course, in many climates, the differential between the ideal temperature within the building and the current air temperature outside is relatively large. Humidity is also a major factor in many cities. Current systems require a large portion of the air to be drawn from outside the building and this temperature differential needs to be accommodated by the air-conditioning system itself. By being able to treat the air within the building, the present invention allows air that is already close to the ideal temperature from within the building to be treated and returned to the building and hence minimizing the need to further condition the air. This occurs both in hotter and colder climates if the air is either cooled or heated from outside using the current technology.

A yet further advantage of the present invention is noted in the potential reduction of greenhouse gases. It is significant that air-conditioning can account for up to 70% of energy used in industrialized cities. The significant reductions in the requirement for air-conditioning that may be gained by the present invention not only provide savings to the building owner but also on a nation-wide basis, significantly reducing power usage. This may reduce greenhouse emissions from power plants currently used. Even in countries with relatively clean sources of electrical energy such as hydropower, there is often a use of power stations that emit greenhouse gases during peak load seasons. The energy saving potential of the present invention may reduce the need for these additional power sources as variation in seasonal power usage may be reduced.

A yet further reduction in greenhouse reducing gases is obtained by the elimination of the exhaust of pollutants from buildings. With current air-conditioning systems seeking to expel the pollutants into the surrounding atmosphere, the buildings themselves can significantly deteriorate the environmental conditions within a city. Treatment of the air rather than exhaust of the pollutants can provide major benefits in this respect.

This invention has generally been described with reference to preferred embodiments that should not be considered limiting to the scope of the invention, which is set forth in the appended claims.

**Claims**

1. A method of improving the air quality within an enclosed space comprising the steps of:

- drawing air from within said enclosed space;
- passing said drawn air through at least a first filter to remove at least some particulates;
- directing filtered air to and retaining within at least a first molecular sieve (8) containing nitrogen and/or carbon dioxide and/or carbon monoxide absorbing material;
- allowing air of greater usable oxygen content to be drawn from said molecular sieve (8) and directed to an outlet (10) within said enclosed space;
- flushing said molecular sieve (8) to remove at least some nitrogen and other gases from said molecular sieve while containing or caging carbon from carbon containing gases; **characterised in that**
- at least a portion of nitrogen and other gases resulting from the removal of carbon are flushed from said molecular sieve (8) and returned and combined with said air of higher usable oxygen content.

2. A method of improving the air quality within an enclosed space as claimed in claim 1 wherein the at least a first molecular sieve (8) includes an aluminium silicate.

3. A method of improving the air quality within an enclosed space as claimed in claim 1 wherein said molecular sieve (8) contains zeolite.

4. A method of improving the air quality within an enclosed space as claimed in any preceding claim wherein said method includes the provision of at least two molecular sieves operating in the alternative such that at least one sieve is operating while a first sieve is flushed.

5. A method of improving the air quality within an enclosed space as claimed in claim 4 wherein said method includes the use of three molecular sieves such that one is being filled, a further is retaining drawn air for a period of time and a third is being flushed.

6. A method of improving the air quality within an enclosed space as claimed in any preceding claim wherein said method includes drawing said air from an air circulation system within said enclosed space and returning said air of higher usable oxygen content and reduced pollutants to said circulation system.

7. A method of improving the air quality within an enclosed space as claimed in any preceding claim, wherein said method includes the provision of a free standing unit within a room of a building with an air inlet (4), an outlet for higher usable oxygen and reduced pollutant containing air and said exhaust are all provided on said unit within said room.

8. An apparatus for improving the air quality within an enclosed space comprising:

   - an air inlet (4) to draw air from within said enclosed space;
   - at least a first filter to remove at least some particulates;
   - at least a first molecular sieve (8) containing nitrogen and/or carbon dioxide and/or carbon monoxide absorbing material to receive said filtered air and retain in contact with said nitrogen and/or carbon dioxide and/or carbon monoxide absorbing material;
   - an outlet (10) from said molecular sieve (8) for air having a higher usable oxygen content and reduced pollutants to be drawn and returned to the enclosed space; **characterised in that** the apparatus further comprises
   - means to flush said molecular sieve (8) combined with outlet exhaust into the enclosed space.

9. An apparatus for improving the air quality within an enclosed space as claimed in claim 8 wherein the at least a first molecular sieve includes an aluminium silicate.

10. An apparatus for improving the air quality within an enclosed space as claimed in claim 8 wherein said molecular sieve contains zeolite.

11. An apparatus for improving the air quality within an enclosed space as claimed in any of claims 8 to 10 wherein said apparatus comprises a free-standing unit having an air inlet (4), an outlet for higher usable oxygen and reduced pollutant containing air and an exhaust all within a room environment.

12. Apparatus for improving the air quality within an enclosed space as claimed in any of claims 8 to 11 wherein said apparatus comprises a unit connected or connectable to an air circulation system within said space to treat air throughout said enclosed space.

13. An apparatus for improving the air quality within an enclosed space as claimed in any of claims 8 to 12 wherein said at least a first molecular sieve (8) is operated under a pressure greater than atmospheric.

14. An apparatus for improving the air quality within an enclosed space as claimed in any of claims 8 to 13 wherein said apparatus includes at least three molecular sieves such that one molecular sieve may draw air in while a further molecular sieve is retaining a previously drawn quantity of air and a third molecular sieve is being flushed having completed its cycle of operation.

**Patentansprüche**

1. Verfahren zur Verbesserung der Luftqualität in einem geschlossenen Raum, wobei man:

   - Luft aus dem geschlossenen Raum abzieht;
   - die abgezogene Luft durch wenigstens einen ersten Filter leitet, um wenigstens einige Partikel zu entfernen;
   - gefilterte Luft zu wenigstens einem ersten Molekularsieb (8), welches stickstoff- und /oder kohlendioxid- und/oder kohlenmonoxidabsorbierendes Material enthält, leitet und in ihm zurückhält;
   - ermöglicht, dass Luft mit größerem nutzbarem Sauerstoffgehalt aus dem Molekularsieb (8) abgezogen und zur einem Auslass (10) in dem geschlossenen Raum geleitet wird;
   - das Molekularsieb (8) spült, um wenigstens einen Teil des Stickstoffs oder anderer Gase aus dem Molekularsieb zu entfernen, während Kohlenstoff aus kohlenstoffhaltigen Gasen eingebunden oder eingesperrt bleibt, **dadurch gekennzeichnet, dass**
   - wenigstens ein Teil des Stickstoffs oder anderer Gase, die bei der Beseitigung von Kohlenstoff entstehen, aus dem Molekularsieb (8) gespült und zurückgeführt und mit der Luft mit höherem nutzbarem Sauerstoffgehalt kombiniert wird.

2. Verfahren zur Verbesserung der Luftqualität in einem geschlossenen Raum gemäß Anspruch 1, wobei das wenigstens eine Molekularsieb (8) ein Aluminiumsilikat enthält.

3. Verfahren zur Verbesserung der Luftqualität in einem geschlossenen Raum gemäß Anspruch 1, wobei das Molekularsieb (8) Zeolit enthält.

4. Verfahren zur Verbesserung der Luftqualität in einem geschlossenen Raum gemäß einem der vorhergehenden Ansprüche, wobei das Verfahren umfasst, wenigstens zwei Molekularsiebe vorzusehen, die in der Weise abwechselnd arbeiten, dass wenigstens ein Sieb arbeitet, während ein erstes Sieb gespült wird.

5. Verfahren zur Verbesserung der Luftqualität in einem geschlossenen Raum gemäß Anspruch 4, wobei das Verfahren die Verwendung von drei Molekularsieben in der Weise umfasst, dass eines gefüllt wird, ein weiteres die angesaugte Luft für einen gewissen Zeitraum zurückhält und ein drittes gespült wird.

6. Verfahren zur Verbesserung der Luftqualität in einem geschlossenen Raum gemäß einem der vorhergehenden Ansprüche, wobei das Verfahren umfasst, Luft aus einem Umluftsystem in dem geschlossenen Raum abzuziehen und die Luft mit höherem nutzbarem Sauerstoffgehalt und verringertem Gehalt an Verunreinigungen in das Umluftsystem zurückzuführen.

7. Verfahren zur Verbesserung der Luftqualität in einem geschlossenen Raum gemäß einem der vorhergehenden Ansprüche, wobei das Verfahren umfasst, eine freistehende Einheit in einem Raum eines Gebäudes vorzusehen, die einen Lufteinlass (4) und einen Auslass für besser nutzbaren Sauerstoff und weniger Verunreinigungen enthaltende Luft umfasst, wobei die Auslässe alle auf der Einheit in dem Raum vorgesehen sind.

8. Vorrichtung zur Verbesserung der Luftqualität in einem geschlossenen Raum mit:

   - einem Lufteinlass (4), um Luft aus dem geschlossenen Raum abzuziehen;
   - wenigstens einem ersten Filter, um wenigstens einige Partikel zu entfernen;
   - wenigstens einem ersten Molekularsieb (8), welches stickstoff- und/oder kohlendioxid- und/oder kohlenmonoxidabsorbierendes Material enthält, um die gefilterte Luft aufzunehmen und in Kontakt mit dem stickstoff-, und/oder kohlendioxid- und/oder kohlenmonoxidabsorbierenden Material zurückzuhalten;
   - einem Auslass (10) aus dem Molekularsieb (8), damit Luft mit höherem nutzbarem Sauerstoffgehalt und weniger Verunreinigungen abgezogen und in den geschlossenen Raum zurückgeleitet werden kann, **dadurch gekennzeichnet, dass** die Vorrichtung außerdem umfasst:
   - Mittel zum Spülen des Molekularsiebs (8) kombiniert mit einem Entlüftungsauslass in den geschlossenen Raum.

9. Vorrichtung zur Verbesserung der Luftqualität in einem geschlossenen Raum gemäß Anspruch 8, wobei das wenigstens eine erste Molekularsieb Aluminiumsilikat enthält.

10. Vorrichtung zur Verbesserung der Luftqualität in einem geschlossenen Raum gemäß Anspruch 8, wobei das Molekularsieb Zeolit enthält.

11. Vorrichtung zur Verbesserung der Luftqualität in einem geschlossenen Raum gemäß einem der Ansprüche 8 bis 10, wobei die Vorrichtung eine freistehende Einheit mit einem Lufteinlass (4), einem Auslass für besser nutzbaren Sauerstoff und weniger Verunreinigung enthaltende Luft und einer Entlüftungsöffnung, die sich aller innerhalb einer Raumumgebung befinden.

12. Vorrichtung zur Verbesserung der Luftqualität in einem geschlossenen Raum gemäß einem der Ansprüche 8 bis 11, wobei die Vorrichtung eine Einheit umfasst, die mit einem Umluftsystem in dem Raum verbunden oder verbindbar ist, um Luft in dem geschlossenen Raum zu behandeln.

13. Vorrichtung zur Verbesserung der Luftqualität in einem geschlossenen Raum gemäß einem der Ansprüche 8 bis 12, wobei das wenigstens eine Molekularsieb (8) bei einem höheren Druck als dem Atmosphärendruck betrieben wird.

14. Vorrichtung zur Verbesserung der Luftqualität in einem geschlossenen Raum gemäß einem der Ansprüche 8 bis 13, wobei die Vorrichtung wenigstens drei Molekularsiebe in der Weise umfasst, dass ein Molekularsieb Luft ansaugen kann, während ein weiteres Molekularsieb eine vorher angesaugte Luftmenge zurückhält und ein dritte Molekularsieb, das seinen Betriebszyklus beendet hat, gespült wird.


**Revendications**

1. Procédé pour améliorer la qualité de l'air dans un espace clos comprenant les stades dans lesquels :

   - on retire de l'air de l'espace clos ;
   - on fait passer l'air retiré dans au moins un premier filtre pour éliminer au moins certaines particules ;
   - on envoie de l'air filtré à au moins un premier tamis (8) moléculaire contenant une matière absorbant l'azote et/ou le dioxyde de carbone et/ou le monoxyde de carbone et on l'y retient ;
   - on fait que de l'air ayant une assez grande teneur en oxygène utilisable soit retiré du tamis (8) moléculaire et envoyé à une sortie (10) dans l'espace clos ;
   - on balaie le tamis (8) moléculaire pour éliminer au moins un peu d'azote et d'autres gaz du tamis moléculaire tout en piégeant ou en bloquant du carbone provenant de gaz contenant du carbone ; **caractérisé en ce que**
   - on balaie du tamis (8) moléculaire au moins une partie de l'azote et d'autres gaz provenant de l'élimination de carbone et on les retourne et on les combine à l'air de teneur assez grande en oxygène utilisable.

2. Procédé pour améliorer la qualité de l'air dans un espace clos suivant la revendication 1, dans lequel le au moins un premier tamis (8) moléculaire comprend un silicate d'aluminium.

3. Procédé pour améliorer la qualité de l'air dans un espace clos suivant la revendication 1, dans lequel le tamis (8) moléculaire contient un zéolite.

4. Procédé pour améliorer la qualité de l'air dans un espace clos suivant l'une quelconque des revendications précédentes, dans lequel le procédé comprend le fait de prévoir au moins deux tamis moléculaires fonctionnant en alternance, de sorte qu'au moins un tamis fonctionne alors qu'un premier tamis est balayé.

5. Procédé pour améliorer la qualité de l'air dans un espace clos suivant la revendication 4, dans lequel le procédé comprend l'utilisation de trois tamis moléculaires de façon à ce que l'un soit garni, un autre retienne de l'air soutiré pendant un laps de temps et un troisième soit balayé.

6. Procédé pour améliorer la qualité de l'air dans un espace clos suivant l'une quelconque des revendications précédentes, dans lequel le procédé comprend le retrait de l'air d'un système de circulation d' air dans l'espace clos et le retour de l'air à teneur assez grande en oxygène utilisable et ayant moins de polluants au système de circulation.

7. Procédé pour améliorer la qualité de l'air dans un espace clos suivant l'une quelconque des revendications précédentes, dans lequel le procédé comprend le fait de prévoir une unité autonome dans une pièce d'un bâtiment ayant une entrée (4) d'air, une sortie pour de l'air ayant une teneur assez grande en oxygène utilisable et peu de polluants et l'évacuation qui sont tous prévus sur l'unité dans la pièce.

8.  Dispositif pour améliorer la qualité de l'air dans un espace clos comprenant :

    - une entrée (4) d'air pour retirer de l'air de l'espace clos ;
    - au moins un premier filtre pour éliminer au moins certaines particules ;
    - au moins un premier tamis (8) moléculaire contenant de la matière absorbant de l'azote et/ou du dioxyde de carbone et/ou monoxyde de carbone pour recevoir l'air filtré et pour le retenir en contact avec la matière absorbant l'azote et/ou le dioxyde de carbone et/ou le monoxyde de carbone ;
    - une sortie (10) du tamis (8) moléculaire pour retirer de l'air ayant une teneur assez grande en oxygène utilisable et peu de polluants et le retourner à l'espace clos ; **caractérisé en ce que** le dispositif comprend en outre
    - des moyens pour balayer le tamis (8) moléculaire combinés à une évacuation de sortie dans l'espace clos.

9.  Dispositif pour améliorer la qualité de l'air dans un espace clos suivant la revendication 8, dans lequel le au moins premier tamis moléculaire comprend un silicate d'aluminium.

10. Dispositif pour améliorer la qualité de l'air dans un espace clos suivant la revendication 8, dans lequel le tamis moléculaire contient un zéolite.

11. Dispositif pour améliorer la qualité de l'air dans un espace clos suivant l'une quelconque des revendications 8 à 10, dans lequel le dispositif comprend une unité autonome ayant une entrée (4) d'air, une sortie pour de l'air contenant une teneur assez grande en oxygène utilisable et peu de polluants et une évacuation tous dans l'atmosphère de la pièce.

12. Dispositif pour améliorer la qualité de l'air dans un espace clos suivant l'une quelconque des revendications 8 à 11, dans lequel le dispositif comprend une unité communiquant ou pouvant communiquer avec un système de circulation d'air dans l'espace pour traiter de l'air dans l'espace clos.

13. Dispositif pour améliorer la qualité de l'air dans un espace clos suivant l'une quelconque des revendications 8 à 12, dans lequel le au moins un premier tamis (8) moléculaire fonctionne sous une pression plus grande que la pression atmosphérique.

14. Dispositif pour améliorer la qualité de l'air dans un espace clos suivant l'une quelconque des revendications 8 à 13, dans lequel le dispositif comprend au moins trois tamis moléculaires de façon à ce que l'un des tamis moléculaires puisse retirer de l'air, tandis qu'un autre tamis moléculaire retient une quantité d'air précédemment retirée et qu'un troisième tamis moléculaire est balayé en ayant achevé son cycle de fonctionnement.

EP 1 307 276 B1

non-return valve — 31

bacterial filter — 30

↓ 1

regulator 350 mbar — 28

O₂ to user max. 350 mbar

non-return valve — 24

S1 — 22    S2 — 23 / 14    S3 — 26 / 15

9

32    33

molecular sieve 1 — 8    molecular sieve 2    molecular sieve 3

| 1. step | I | is being charged | III lock | II | ventilate + rinse |
| 2. step | II | is being charged | I lock | III | ventilate + rinse |
| 3. step | III | is being charged | II lock | I | ventilate + rinse |

2

compressor 16

dustfilter — 3    finefilter — 5    sound absorber incl filter — 6

4 →

200mbar    7    11    1.6bar    E1 19    A1    E2 20    A2    E3 21    A3

nitrogen

25    26    27

13 ←    Sound absorber — 12

FIG 1

Graphically the results are displayed as follows:

FIG 2

FIG. 3

FIG. 4

FIG. 5

OUTDOOR
AIR - IN ①    ④

PRIMARY AIR
INTAKE

8

OFFICE/RESIDENCE/
HABITABLE SPACE.

②

AIR FLOW

43    42

AHU ③

Ⓐ

41

FIG 6